# EUROPÄISCHE PATENTANMELDUNG

(11) **EP 1 810 922 A1**
(43) Veröffentlichungstag der Anmeldung: **25.07.2007**
(21) Anmeldenummer: 06405025.5
(22) Anmeldetag: 23.01.2006
(51) Int. Cl.: B65B 9/06, B65B 51/30, B65B 59/02

(54) **Verfahren und Einrichtung zum Verpacken von Gegenständen in einer umhüllenden Folie**

(71) Anmelder: Müller Martini Holding AG, 6052 Hergiswil (CH)
(72) Erfinder: Marbacher, Beat, 6244 Nebikon (CH)

(57) **Zusammenfassung**

Zum Verpacken von Gegenständen (3, 4) in einer umhüllenden Folie (43, 44) werden die Gegenstände (3, 4) hintereinander im Wesentlichen mit konstanter Geschwindigkeit mit einer Transportvorrichtung (2) einer Schweissvorrichtung (1) zugeführt. Die Schweissvorrichtung (1) besitzt wenigstens eine Schweisstrommel (6) mit wenigstens einem Schweissbalken (23) und eine Gegentrommel (5) mit wenigstens einem Gegenbalken (39). Die Trommeln (5, 6) sind gegeneinander rotierend angetrieben. Mit diesen Trommeln (5, 6) wird die Folie (43, 44) jeweils zwischen zwei Gegenstände (3, 4) in einem leeren Zwischenraum (L) beim Durchfahren einer Schweissstrecke (H) versiegelt und getrennt. Die Schweisstrommel (6) und die Gegentrommel (5) sind von einem Servomotor dynamisch angetrieben. Die Erfindung ermöglicht eine einfache und schnelle Anpassung an unterschiedliche Breiten (D) der Gegenstände (3, 4).

## Beschreibung

Die Erfindung betrifft ein Verfahren zum Verpacken von Gegenständen in einer umhüllenden Folie, wobei die Gegenstände hintereinander im Wesentlichen mit konstanter Geschwindigkeit mit einer Transportvorrichtung einer Schweissvorrichtung zugeführt werden, die eine Schweisstrommel mit wenigstens einem Schweissbalken und eine Gegentrommel mit wenigstens einem Gegenbalken aufweist, welche Trommeln mit einem Antrieb gegeneinander rotierend angetrieben sind und zwischen denen die Folie jeweils zwischen zwei durch die Folie umhüllten Gegenständen in einem leeren Zwischenraum beim Durchfahren einer Schweissstrecke verschweisst und getrennt wird.

Ein Verfahren der genannten Art ist durch die DE-A-1 511 728 bekannt geworden. Dieses dient zum kontinuierlichen Abpacken und Abfüllen von Nahrungsmitteln oder anderen Feststoffen in einer zylindrischen Folie. Die Folie wird durch Einwirkung von Hitze versiegelt und sodann abgetrennt. Zum Versiegeln und Abtrennen der Folie sind zwei von Antriebsmitteln angetriebene Traversen vorgesehen, die in horizontaler und vertikaler Richtung beweglich sind. Hierzu sind die Traversen an ihren Enden in Ausnehmungen geführt. Die beiden Traversen werden während einer gewissen Zeitdauer auf der Schweissstrecke gegeneinander zur Anlage gebracht und hierbei in horizontaler Richtung geführt. Das Erhitzen und Durchtrennen der Folie erfolgt mit einer Heizplatte, die zwischen zwei Klemmmitteln angeordnet ist. Die Klemmmittel sind radial einfederbar. Dies gilt auch für zwei korrespondierende Platten des Gegenbalkens.

Ein weiteres Verfahren sowie eine Vorrichtung zum Formen einzelner Verpackungen mittels einer Schweissvorrichtung ist durch die CH 536 222 bekannt geworden. Die Schweissvorrichtung besitzt zwei gegenläufig rotierende parallele Schneidkopfwellen, von denen die eine eine flexible Klinge und die andere eine starre Klinge trägt. Die Klingen werden mit gleicher Geschwindigkeit auf einer sich schneidenden Kreisbahn bewegt.

Die bekannten Verfahren bzw. Einrichtungen haben den Nachteil, dass sie nicht oder nur umständlich an unterschiedliche Formate bzw. Taktabstände der Gegenstände anpassbar sind.

Aufgabe der Erfindung ist es, die Nachteile zu beheben.

Erfindungsgemäss wird die Aufgabe dadurch gelöst, dass der Antrieb der Trommeln dynamisch ist und die Drehbewegungen der beiden Trommeln zur Anpassung an unterschiedliche Formate der Gegenstände gesteuert werden.
Mit einem solchen Antrieb, der beispielsweise kostengünstig mit einem Synchron-Servomotor realisiert werden kann, ist es möglich, auch bei unterschiedlichen Formaten bzw. Taktabständen die Schweisstrommel und die Gegentrommel so zu steuern, dass der Schweissbalken und der Gegenbalken jeweils für den Schweiss- und Trennvorgang im richtigen Zeitpunkt zwischen zwei Gegenstände eingreifen. Bei kurzen Gegenständen werden die Schweisstrommeln und die Gegentrommeln vor dem Eintauchen in die Lücken beschleunigt und bei vergleichsweise langen Gegenständen verzögert. Durch geeignete in der Servosteuerung hinterlegte Kurven ist eine Umstellung auf unterschiedliche Formate bzw. unterschiedliche Takte sehr einfach und schnell möglich. Das Verfahren eignet sich insbesondere zum Verpacken von Druckprodukten, beispielsweise Zeitungen, Zeitschriften, Broschüren und Büchern, die bekanntlich sehr unterschiedliche Formate und insbesondere unterschiedliche Breiten aufweisen können. Damit ist es grundsätzlich möglich, auch Produktströme mit unterschiedlichen Gegenständen bzw. Druckprodukten mit der gleichen Schweissvorrichtung zu verpacken.

Das erfindungsgemässe Verfahren hat zudem den wesentlichen Vorteil, dass die Schweisstrommel und die Gegentrommel auch im Bereich der Schweissstrecke so gesteuert werden können, dass der wenigstens eine Schweissbalken und der wenigstens eine Gegenbalken im Bereich der Schweissstrecke mit einem in Transportrichtung gleichbleibenden Geschwindigkeitsvektor bewegt werden und dieser Geschwindigkeitsvektor gleich der Transportgeschwindigkeit der Folie und der Gegenstände ist. Der Schweissbalken und der Gegenbalken fahren in Förderrichtung entlang der Schweissstrecke und während dieser Zeit wird die Schweissnaht gebildet und die Folie durchgetrennt. Da der Schweissbalken und der Gegenbalken mit der genau gleichen Geschwindigkeit bewegt werden wie die Folie und die Gegenstände, kann auch bei höherer Geschwindigkeit eine sehr saubere Naht erreicht werden.

Nach einer Weiterbildung der Erfindung ist vorgesehen, dass der wenigstens eine Schweissbalken und der wenigstens eine Gegenbalken radial federnd gelagert sind und im Bereich der Schweissstrecke radial einfedern.

Mit dem erfindungsgemässen Verfahren ist es zudem möglich, gleichzeitig zwei parallele und in Transportrichtung um einen halben Takt versetzte Produktströme zu bearbeiten. Hierzu ist vorgesehen, dass die Gegenstände in zwei parallelen Produktströmen transportiert und der Schweissvorrichtung zugeführt werden, wobei die beiden Produktströme in Transportrichtung um einen halben Taktabstand zueinander versetzt sind und die Schweissvorrichtung für jeden Produktstrom jeweils wenigstens einen Schweissbalken und wenigstens einen Gegenbalken aufweist. Dadurch ist eine entsprechend höhere Leistung mit einer einzigen Einrichtung bzw. einzigen Schweissvorrichtung möglich.

Die Verarbeitung von zwei parallelen Produktströmen ist dann besonders leistungsfähig, wenn gemäss einer Weiterbildung der Erfindung die Schweissvorrichtung für jeden Produktstrom jeweils zwei Schweissbalken und zwei Gegenbalken aufweist, wobei zwei Schweissbalken und Gegenbalken gegenüber den anderen beiden Schweissbalken und Gegenbalken um 180° gedreht sind. Die vier Schweissbalken und die vier Gegenbalken können jeweils auf der gleichen Welle angeordnet und vom gleichen Antrieb angetrieben sein. Auch in diesem Fall ist jederzeit und sehr einfach eine Anpassung an unterschiedliche Formate bzw. Taktabstände möglich.

Nach einer Weiterbildung des Verfahrens ist vorgesehen, dass die umhüllende Folie aus einer oberen und einer unteren Folienbahn gebildet wird, wobei die zu verpackenden Gegenstände zwischen diesen Folienbahnen transportiert werden. Die beiden Folienbahnen werden seitlich laufend verschweisst, so dass sich mit den Quernähten eine allseitig geschlossene schlauchförmige bzw. zylindrische Verpackung ergibt. Die Folien bestehen in bekannter Weise aus thermoplastischem Kunststoff oder einem anderen geeigneten Material und können jeweils von einer Rolle abgezogen werden.

Nach einer Weiterbildung des erfindungsgemässen Verfahrens ist vorgesehen, dass mit einer Messvorrichtung die Positionen und insbesondere die vorlaufenden Kanten der zu verpackenden Gegenstände gemessen werden und dass die Schweissvorrichtung aufgrund dieser Positionsmessung gesteuert wird. Dadurch ist es möglich, auch Produktströme mit unterschiedlich breiten Gegenständen bei gleichzeitig hoher Leistung zu verpacken. Die Messung kann beispielsweise und vorzugsweise kapazitiv erfolgen. Gemessen wird beispielsweise die Position einer vorauslaufenden Kante. Das Messresultat wird über ein Signal der Steuervorrichtung zugeführt, welche die beiden Trommeln entsprechend steuert.

Die erfindungsgemässe Einrichtung zeichnet sich dadurch aus, dass die Antriebsvorrichtung wenigstens einen Servomotor aufweist, so dass die Drehgeschwindigkeiten dieser beiden Trommeln veränderbar sind. Möglich ist eine Ausführung mit lediglich einem Elektromotor, wobei die Drehbewegung mit einem Getriebe von der einen Trommel auf die andere Trommel übertragen wird. Denkbar ist aber auch eine Ausführung, bei welcher die Schweisstrommel und die Gegentrommel jeweils von einem eigenen Servomotor angetrieben sind.

Bei der erfindungsgemässen Einrichtung ist es möglich, eine nahezu optimale Geometrie mit den wesentlichen Parametern zu definieren, so dass die Drehbewegungen der Schweisstrommeln und der Gegentrommeln nahezu konstant verlaufen und damit eine entsprechend hohe Taktzahl erreicht wird. Die wesentlichen Parameter sind insbesondere die Formatbreite, die Lücke zwischen den Gegenständen, der Trommelradius, die Achsdistanz zwischen den Trommeln und die Anzahl der Schweissbalken bzw. der Gegenbalken. Mit der erfindungsgemässen Einrichtung ist somit insbesondere möglich, zwei Produkteströme gleichzeitig und mit hoher Taktzahl zu bearbeiten.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: eine räumliche Ansicht einer erfindungsgemässen Einrichtung,
- Fig. 2: eine weitere Ansicht der erfindungsgemässen Einrichtung,
- Fig. 3a und 3b: jeweils ein Schnitt durch eine erfindungsgemässe Einrichtung nach einer Variante, wobei die beiden gezeigten Stellungen um einen Takt verschoben sind und
- Fig. 4: ein weiterer Schnitt durch die erfindungsgemässe Einrichtung gemäss den Figuren 3a und 3b.

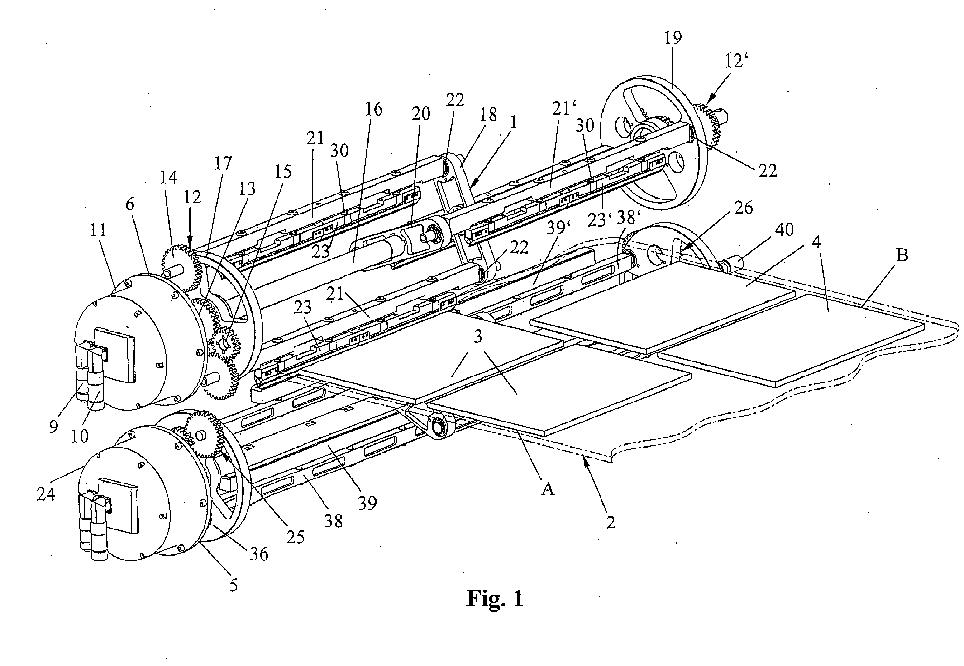

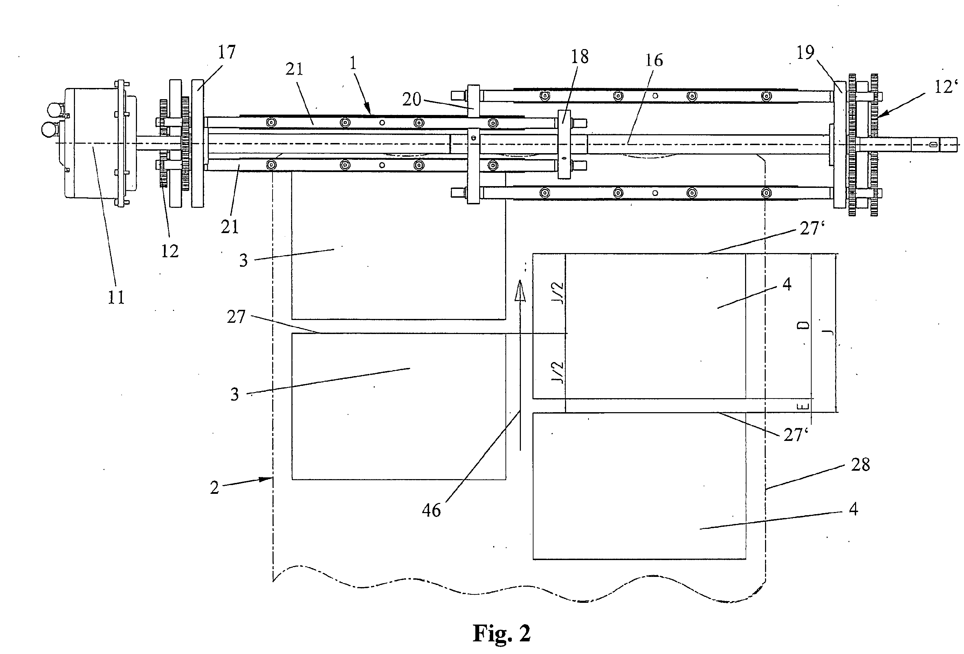

Die in den Figuren 1 und 2 gezeigte erfindungsgemässe Einrichtung weist eine Schweissvorrichtung 1 sowie eine Transportvorrichtung 2 auf. Mit der Transportvorrichtung 2 werden ein erster Produktestrom A mit flachen Gegenständen 3 sowie ein zweiter Produktestrom B mit flachen Gegenständen 4 der Schweissvorrichtung 1 zugeführt. Die Gegenstände 3 und 4 können an sich beliebige zu verpackende Produkte sein. Sie sind aber vorzugsweise Druckprodukte, beispielsweise Zeitschriften, Broschüren, Zeitungen oder Bücher. Sie werden gemäss Figur 2 vorzugsweise so gefördert, dass eine Vorderkante und insbesondere ein Rücken 27 bzw. 27' vorausläuft. Der Taktabstand J ergibt sich aus der Summe einer Formatbreite D und einer Spaltbreite E.

Die beiden Produktströme A und B sind gemäss Figur 2 um einen halben Taktabstand J/2 in Transportrichtung gegeneinander versetzt. Die Transportrichtung ist in der Figur 2 mit dem Pfeil 46 angedeutet. Die Transportvorrichtung 2 weist beispielsweise für den Transport der Gegenstände 3 und 4 ein endloses Transportorgan 28 auf, das um zwei hier nicht gezeigte Rollen gelegt ist. Das Transportorgan 28 kann aber auch durch ein anderes geeignetes Transportmittel ersetzt sein.

Die Transportvorrichtung 2 ist so angetrieben, dass die Gegenstände 3 und 4 bzw. die Produktströme A und B mit gleicher und konstanter Geschwindigkeit der Schweissvorrichtung 1 zugeführt werden. Die Spaltbreiten E zwischen den Gegenständen 3 und 4 sind jeweils gleich. Zwischen den Produktströmen A und B besteht ebenfalls ein Abstand.

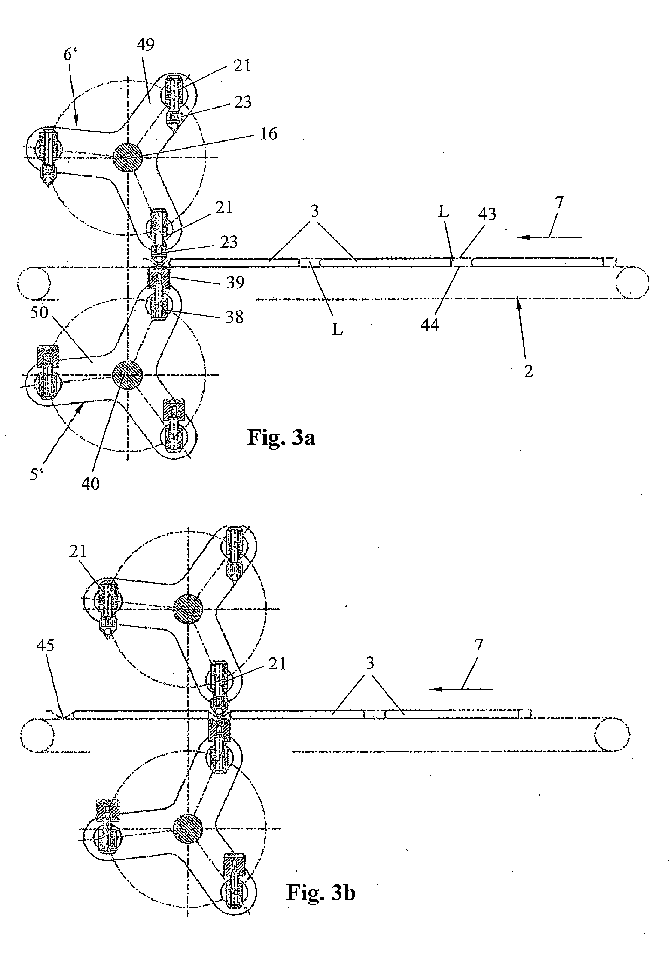

Die Schweissvorrichtung 1 weist eine Schweisstrommel 6 auf, die mit einer Gegentrommel 5 zum Verschweissen und Trennen einer umhüllenden Folie zusammenarbeitet. Mit dieser Folie werden die Gegenstände 3 und 4 jeweils einzeln verpackt. Die Folie besteht gemäss den Figuren 3a und 3b aus einer unteren Folienbahn 44 und einer oberen Folienbahn 43. Diese Folienbahnen 43 und 44 bestehen aus thermoplastischem Kunststoff und werden jeweils von einer hier nicht gezeigten Rolle abgezogen. Die Gegenstände 3 und 4 können auch in schlauchförmigen oder gefalteten Folien transportiert werden. Solche schweissbaren Folien sind dem Fachmann bekannt. Die Gegentrommel 5 und die Schweisstrommel 6 erstrecken sich quer zur Transportrichtung gemäss Pfeil 7 der Transportvorrichtung 2, wobei gemäss Figur 1 die Schweisstrommel 6 oben und die Gegentrommel 5 unten angeordnet sind. Beide Trommeln 5 und 6 sind an einem hier nicht gezeigten Gestell gelagert.

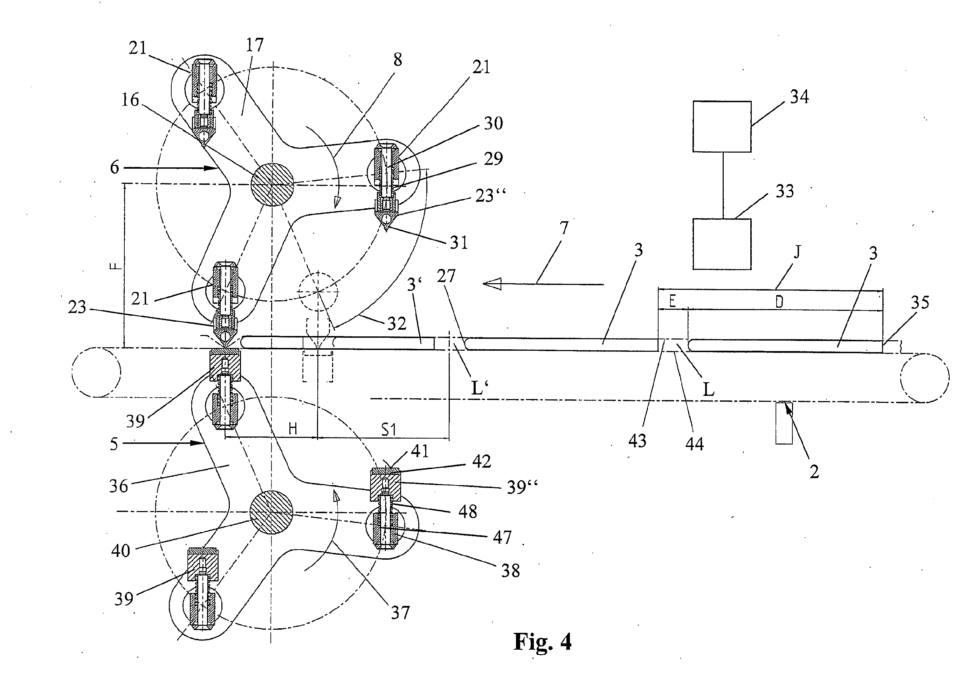

Die Schweisstrommel 6 besitzt für den Antrieb einer Welle 16 einen Antrieb 11, der einen hier nicht gezeigten hochdynamischen Elektromotor bzw. Servomotor und insbesondere einen Synchron-Servomotor aufweist, der über eine Signalleitung 9 mit einer Steuervorrichtung und über eine Versorgungsleitung 10 mit einer Stromquelle verbunden ist. Auf der Welle 16 sind im Abstand zueinander ein Halter 17 sowie ein Halter 19 drehfest angeordnet. Zwischen diesen Haltern 17 und 19 sind zwei zweiarmige Halter 18 und 20 drehfest mit der Welle 16 verbunden. Diese Halter 18 und 20 sind zueinander um 90° versetzt, wie die Figur 1 zeigt. An den Haltern 17 und 18 sind zwei balkennförmige Träger 21 drehbar gelagert. Die in Figur 1 gezeigten Lager 22 sind beispielsweise Wälzlager. An jedem Träger 21 ist ein Schweissbalken 23 befestigt, der gemäss Figur 4 eine lineare Schweisskante 31 besitzt. Die beiden Träger 21 sind jeweils über ein Planetenrad 14 und einem Zwischenrad 15 mit einem Sonnenrad 13 verbunden, das fest auf der Welle 16 befestigt ist. Die Räder 14, 15 und 13 bilden ein Planetengetriebe 12, das die Träger 21 so steuert, dass sie bei drehender Welle 16 jeweils vertikal ausgerichtet sind. Entsprechend sind die Schweissbalken 23 ausgerichtet. Die Schweisskante 31 ist somit auch bei drehender Welle 16 immer nach unten gerichtet und verlaufen parallel zueinander.

An den Haltern 19 und 20 sind ebenfalls zwei Träger 21' gelagert, an denen jeweils ein Schweissbalken 23' befestigt ist. Die Träger 21' werden ebenfalls mit einem Planetengetriebe 12' so gesteuert, dass sie immer vertikal ausgerichtet sind. Wie ersichtlich überlappen sich die Träger 21 und 21' an ihren inneren Enden. Die Schweissbalken 23 und 23' sind jedoch in Achsrichtung der Welle 16 seitlich so versetzt, dass sie sich nicht überlappen. Die Schweissbalken 23 sind so angeordnet, dass mit ihnen der Produktestrom A bearbeitet werden kann, während die Schweissbalken 23' so angeordnet sind, dass mit ihnen der Produktestrom B bearbeitet werden kann, jedoch um einen halben Takt versetzt.

Die Schweissbalken 23 und 23' sind jeweils mit Führungsbolzen 30 am Träger 21 bzw. 21' gemäss Figur 4 so gelagert, dass der Schweissbalken 23 bzw. 23' begrenzt einfedern kann. Dazu sind bei jedem Führungsbolzen 30 zwischen dem Träger 21 bzw. 21' und dem Schweissbalken 23 bzw. 23' eine Spiralfeder 29 oder ein anderes geeignetes Federelement angeordnet. Beim Einfedern bleiben die Schweissbalken 23 und 23' zu den Trägern 21 und 21' parallel ausgerichtet, was durch die Führung der Führungsbolzen 30 gewährleistet ist.

Die Gegentrommel 5 besitzt ebenfalls einen dynamischen Antrieb 24, der gleich wie der Antrieb 11 ausgebildet sein kann und der ebenfalls über eine Steuerleitung 9 und eine Versorgungsleitung 10 angeschlossen ist. Dieser treibt die in Figur 4 gezeigte Welle 40 der Gegentrommel 5 an. Die beiden Wellen 16 und 40 sind synchron angetrieben und bewegen sich gegeneinander. Bei drehenden Trommeln arbeitet jeweils ein Schweissbalken 21 bzw. 21' mit einem Gegenbalken 39 bzw. 39' der Gegentrommel 5 zusammen. Die Gegenbalken 39 sind jeweils an einem balkenförmigen Träger 38 gelagert. Die Lagerung erfolgt ebenfalls gemäss Figur 4 mit Führungsbolzen 47 und Federn 48. Die Gegenbalken 39 können somit ebenfalls begrenzt einfedern. Damit die Gegenbalken 39 ebenfalls bei drehender Welle 40 immer vertikal ausgerichtet sind, besitzt die Gegentrommel 5 ebenfalls ein Planetengetriebe 25, das auf der Welle 40 angeordnet ist.

Wie die Schweisstrommel 6 besitzt auch die Gegentrommel 5 zwei weitere Träger 38' und Gegenbalken 39', die von einem weiteren Planetengetriebe 25' gesteuert sind. Jeder Schweissbalken 23 bzw. 23' arbeitet somit mit einem Gegenbalken 39 bzw. 39' zusammen. Die Träger 38 und 38' sind drehbar an Haltern gelagert, von denen in Figur 1 die beiden äusseren Halter 36 und 26 gezeigt sind.

Die Einrichtung gemäss den Figuren 1 und 2 dient zur gleichzeitigen Bearbeitung der beiden Produkteströme A und B. Die Produkteströme A und B sind um einen halben Takt verschoben, so dass diese abwechselnd geschweisst werden. Grundsätzlich ist auch eine Ausführung denkbar, mit der lediglich ein Produktestrom A bearbeitbar ist. Bei einer solchen Ausführung können die Träger 21' und die Schweissbalken 23' sowie die Träger 38' und die Gegenbalken 39' sowie die entsprechenden Träger und Planetengetriebe weggelassen werden. Die Wellen 16 und 40 sind dann entsprechend kürzer. Denkbar ist zudem eine Ausführung, bei welcher die Gegentrommel 5 lediglich einen Gegenbalken 39 und die Schweisstrommel 6 lediglich einen Schweissbalken 23 aufweisen. Es sind auch Ausführung mit mehr als zwei Schweissbalken 23 bzw. Gegenbalken 39 denkbar. So weist die nachfolgend anhand der Figuren 3a, 3b und 4 gezeigte Einrichtung eine Schweisstrommel 6' mit drei symmetrisch auf der Welle 16 angeordneten Schweissbalken 23 und ebenfalls symmetrisch auf der Welle 40 angeordneten Gegenbalken 39 auf. Die Lagerung erfolgt dann entsprechend auf dreiarmigen Trägern 49 und 50. In den Figuren 3a und 3b wird die Schweisstrommel 6' im Uhrzeigersinn und die Gegentrommel 5' im Gegenuhrzeigersinn gedreht. Die Drehungen erfolgen synchron und im Takt zur Transportvorrichtung 2. Gemäss Figur 3a treffen sich jeweils nach einer Umdrehung der Wellen 16 und 40 um 120° ein Schweissbalken 21 und ein Gegenbalken 39 bei einer Lücke L und verschweissen in dieser Lücke L die beiden Folien 43 und 44 zu einer querverlaufenden Naht miteinander. Gleichzeitig werden die Folien 43 und 44 entlang dieser Naht getrennt, so dass die in Figur 3b gezeigte Trennstelle 45 gebildet wird.

Bei der Bildung der Trennstelle 45 werden der Gegenbalken 39 und der Schweissbalken 23, die zusammenarbeiten, etwa radial eingefedert. Der Schweissbalken 23 bewegt sich in Figur 3b somit etwas nach oben und der Gegenbalken 39 etwas nach unten. Die beiden Folien 43 und 44 werden damit zwischen dem Schweissbalken 23 und dem Gegenbalken 39 entlang der Schweisskante 31 geklemmt. Die Schweisskante 31 wird beispielsweise durch einen an sich bekannten Schweissdraht gebildet, der elektrisch erwärmt wird und dadurch die beiden Folien 43 und 44 miteinander verschweisst und gleichzeitig trennt. Dieser Vorgang erfolgt auf der in Figur 4 mit H angegebenen Schweissstrecke. Im Bereich dieser Schweissstrecke H werden der Schweissbalken 23 und der Gegenbalken 39 aneinander angepresst und daraus erfolgt der Schweiss- und Trennvorgang. Durch das Einfedern des Schweissbalkens 23 und des Gegenbalkens 39 wird der Abstand der Schweisskante 31 zur Welle 16 kleiner und dies gilt ebenfalls für den Abstand der in Figur 4 gezeigten Fläche 41 des Gegenbalkens 39 zur Welle 40. Würden nun die Wellen 16 und 40 beim Durchlaufen der Schweissstrecke H mit gleichbleibender Geschwindigkeit drehen, so würde an der Schweisskante 21 und an der Fläche 41 ein Geschwindigkeitsvektor resultieren, der zur Mitte der Schweissstrecke H kleiner und anschliessend wieder grösser wird. Da die Transportgeschwindigkeit der Transportvorrichtung 2 jedoch konstant ist, würden aufgrund der unterschiedlichen Geschwindigkeiten der Schweissbalken 23 und der Gegenbalken 39 auf die Folien 43 und 44 eine Stauchung bewirken, was für die Schweissqualität nachteilig wäre. Um dies zu vermeiden, sind die Schweisstrommel 6 und die Gegentrommel 5 im Bereich der Schweissstrecke H so gesteuert, dass der genannte Geschwindigkeitsvektor immer gleich der Transportgeschwindigkeit der Transportvorrichtung 2 bzw. der Folien 43 und 44 ist. Die Steuerung erfolgt mit einer im Steuerprogramm der Antriebe hinterlegten Kurve.

Wie bereits oben erwähnt, ist es mit der erfindungsgemässen Einrichtung möglich, Gegenstände 3 und 4 mit unterschiedlichen Breiten D und unterschiedlichen Taktabständen J zu verpacken bzw. einzuschweissen. Dies wird nachfolgend anhand der Figur 4 näher erläutert.

In der Figur 4 sind der Schweissbalken 23 und der Gegenbalken 39 in einer Position, in welcher der Schweiss- und Trennvorgang abgeschlossen sind. Mit dem nachfolgenden Schweissbalken 23" und dem Gegenbalken 39" wird die nächste Trennstelle in der Lücke L' hergestellt, so dass der Gegenstand 3' von den abgetrennten Stücken der Folien 43 und 44 schlauchartig umfasst ist. Der Winkel, um den die Wellen 16 und 40 in Richtung des Pfeils 8 bzw. 37 gedreht werden müssen, damit der Schweissbalken 23" und der Gegenbalken 39'' zum Anfangspunkt der Schweissstrecke H gelangen, ist in Figur 4 mit dem Doppelpfeil 32 eingezeichnet. Die Lücke L' wird entsprechend um die Strecke S1 transportiert. Wie bereits erwähnt, werden die Gegenstände 3 mit einer konstanten, aber format- und taktzahlabhängigen Geschwindigkeit der Steuervorrichtung 1 zugeführt. Die Gegentrommel 5 und die Schweisstrommel 6 sind nun so gesteuert, dass die beiden Wellen 16 und 40 den verbleibenden Drehwinkel so zurücklegen, dass der Schweissbalken 23' ' und der Gegenbalken 39' ' zum gleichen Zeitpunkt beim Beginn der Schweissstrecke H angelangt sind wie die Lücke L' zwischen dem Gegenstand 3' und dem nachfolgenden Gegenstand 3. Soll der Gegenstand 3 mit einer kleineren Breite D verpackt werden, so muss dieser verbleibende Winkel mit einer entsprechend grösseren Durchschnittsgeschwindigkeit zurückgelegt werden, wenn die Transportgeschwindigkeit und die Lückenbreite gleich bleiben sollen. Im anderen Fall wird die Durchschnittsgeschwindigkeit verzögert. Die Umstellung kann sehr schnell und einfach und auch automatisch erfolgen.

Ist der Gegenstand 3' verpackt, so erfolgt in gleicher Weise die Herstellung der weiteren Schweissnähte.

Die Drehbewegungen der Wellen 16 und 40 erfolgen somit in der Regel nicht konstant und mit gleicher Geschwindigkeit, sondern werden im Bereich des Doppelpfeils 32 und/oder im Bereich der Schweissstrecke H beschleunigt bzw. verzögert. Aufgrund des vorgesehenen dynamischen Antriebs sind solche gesteuerte Drehbewegungen jederzeit und sehr schnell möglich. Geeignete elektronische Steuerungen und Steuerprogramme mit geeigneten Kurven und geeigneten Servomotoren bzw. hochdynamischen Elektromotoren sind dem Fachmann an sich bekannt. Die Drehbewegungen der beiden Wellen 16 und 40 sind vorzugsweise so gesteuert, dass nahezu ein Rundlauf der beiden Wellen 16 und 40 resultiert. Nötigenfalls kann ein solcher angestrebter Rundlauf durch Änderung der relevanten Parameter, wie insbesondere der Trommelradius, die in Figur 4 gezeigte halbe Achsdistanz F und die Anzahl der Schweissbalken 23 bzw. der Gegenbalken 39 erreicht werden.

Wie bereits erwähnt, können die in einer Reihe geförderten Gegenstände 3 unterschiedliche Breiten D aufweisen. Damit die Drehbewegungen der Wellen 16 und 40 an diese Breiten D angepasst werden können, ist eine Messvorrichtung 33 vorgesehen, welche jeweils eine vorlaufende Kante, beispielsweise einen Rücken 27 und/oder nachlaufende Kanten, beispielsweise einen Frontschnitt 35 der Gegenstände 3 detektieren kann. Die Messvorrichtung 33 ist beispielsweise eine kapazitive oder optische Messvorrichtung. Die Messresultate werden über entsprechende Signale der Steuervorrichtung 34 übermittelt. Der Drehwinkel gemäss dem Doppelpfeil 32 wird dann so gesteuert, dass jeweils im Bereich einer Lücke L bzw. L' eine Trennstelle 45 hergestellt wird. Damit ist eine automatische Anpassung an unterschiedliche Breiten D möglich. Eine solche Messvorrichtung 33 ist aber insbesondere dann nicht zwingend, wenn die Gegenstände 3 alle im Wesentlichen die gleiche Breite D aufweisen bzw. der Taktabstand J immer gleich ist. Die Schweissvorrichtung 1 kann dann den Takt beispielsweise von der Transportvorrichtung 2 übernehmen.

## Patentansprüche

1. Verfahren zum Verpacken von Gegenständen (3, 4) in einer umhüllenden Folie (43, 44), wobei die Gegenstände (3, 4) hintereinander im Wesentlichen mit konstanter Geschwindigkeit mit einer Transportvorrichtung (2) einer Schweissvorrichtung (1) zugeführt werden, die eine Schweisstrommel (6) mit wenigstens einem Schweissbalken (23) und eine Gegentrommel (5) mit wenigstens einem Gegenbalken (39) aufweist, welche Trommeln (5, 6) mit einem Antrieb (11, 24) gegeneinander rotierend angetrieben sind und zwischen denen die Folie (43, 44) jeweils zwischen zwei durch die Folie umhüllten Gegenständen (3, 4) in einem leeren Zwischenraum (L) beim Durchfahren einer Schweissstrecke (H) verschweisst und getrennt wird, **dadurch gekennzeichnet, dass** der Antrieb (11, 24) der Trommeln (5, 6) dynamisch ist und die Drehbewegungen der beiden Trommeln (5, 6) zur Anpassung an unterschiedliche Formate der Gegenstände (3, 4) gesteuert werden.

2. Verfahren nach Anspruch 1, **dadurch gekennzeichnet, dass** die Schweisstrommel (6) und die Gegentrommel (5) sich im Bereich der Schweissstrecke (H) überdecken und so gesteuert werden, dass der wenigstens eine Schweissbalken (23) und der wenigstens eine Gegenbalken (39) im Bereich der Schweissstrecke (H) mit einem in Transportrichtung (7) gleichbleibenden Geschwindigkeitsvektor bewegt werden und dieser Geschwindigkeitsvektor gleich der Transportgeschwindigkeit der Folien (43, 44) und der Gegenstände (3, 4) ist.

3. Verfahren nach Anspruch 1 oder 2, **dadurch gekennzeichnet, dass** der wenigstens eine Schweissbalken (23) und der wenigstens eine Gegenbalken (39) radial federnd gelagert sind und im Bereich der Schweissstrecke (H) einfedern.

4. Verfahren nach einem der Ansprüche 1 bis 3, **dadurch gekennzeichnet, dass** die Gegenstände (3, 4) in zwei parallelen Produktströmen (A, B) transportiert und der Schweissvorrichtung (1) zugeführt werden, wobei die beiden Produktströme (A, B) in Transportrichtung im gleichen Takt oder um einen halben Takt Abstand (J/2) zueinander versetzt transportiert werden.

5. Verfahren nach Anspruch 4, **dadurch gekennzeichnet, dass** die Schweissvorrichtung (1) für jeden Produktstrom (A, B) jeweils zwei Schweissbalken (23, 23') und zwei Gegenbalken (39, 39') aufweist, wobei die Achse der beiden Schweissbalken (23, 23') und Gegenbalken (39, 39') gegenüber der Achse der anderen beiden Schweissbalken und Gegenbalken um 180° verdreht ist.

6. Verfahren nach einem der Ansprüche 1 bis 5, **dadurch gekennzeichnet, dass** mit der Schweissvorrichtung (1) Gegenstände (3, 4) mit unterschiedlichen Formaten bzw. Taktabständen verarbeitbar sind, wobei zur Anpassung an die unterschiedlichen Formate bzw. Taktabstände (J) die Drehbewegungen der Schweisstrommel (6) und der Gegentrommel (5) angepasst werden.

7. Verfahren nach Anspruch 6, **dadurch gekennzeichnet, dass** die Drehbewegungen der Schweisstrommel (6) und der Gegentrommel (5) vor einer Schweissung in Drehrichtung so beschleunigt oder verzögert werden, dass der wenigstens eine Schweissbalken (23) und der wenigstens eine Gegenbalken (39) zum vorgesehenen Zeitpunkt zwischen zwei Gegenstände (3, 4) in die Lücke (L) eingreifen.

8. Verfahren nach einem der Ansprüche 1 bis 7, **dadurch gekennzeichnet, dass** die umhüllende Folie (43, 44) aus einer oberen und einer unteren Folienbahn (43, 44) gebildet wird, wobei die zu verpackenden Gegenstände (3, 4) zwischen den beiden Folienbahnen (43, 44) transportiert werden.

9. Verfahren nach einem der Ansprüche 1 bis 8, **dadurch gekennzeichnet, dass** mit einer Messvorrichtung (33) die Positionen der zu verpackenden Gegenstände (3, 4) detektiert werden.

10. Verfahren nach Anspruch 9, **dadurch gekennzeichnet, dass** die Messung kapazitiv oder optisch durchgeführt wird.

11. Verfahren nach einem der Ansprüche 1 bis 10, **dadurch gekennzeichnet, dass** die Gegenstände (3, 4) Druckprodukte wie beispielsweise Zeitungen, Zeitschriften, Broschüren oder Bücher sind.

12. Einrichtung zum Verpacken von Gegenständen (3, 4) in einer umhüllenden Folie (43, 44), mit einer Transportvorrichtung (2), mit welcher die Gegenstände (3, 4) hintereinander einer Schweissvorrichtung (1) zuführbar sind, die eine Schweisstrommel (6) mit wenigstens einem Schweissbalken (23) und eine Gegentrommel (5) mit wenigstens einem Gegenbalken (39) aufweist, mit einer Antriebsvorrichtung (11, 24), mit welcher die Schweisstrommel (6) und die Gegentrommel (5) synchron gegeneinander rotierbar sind, so dass der wenigstens eine Schweissbalken (23) und der wenigstens eine Gegenbalken (39) die Folie (43, 44) jeweils zwischen zwei Gegenständen (3, 4) in einem leeren Zwischenraum (L) beim Durchfahren einer Schweissstrecke (H) verschweisst, **dadurch gekennzeichnet, dass** die Antriebsvorrichtung (11, 24) wenigstens einen Servomotor aufweist, so dass die Drehgeschwindigkeiten dieser beiden Trommeln (5, 6) veränderbar sind.

13. Einrichtung nach Anspruch 12, **dadurch gekennzeichnet, dass** der wenigstens eine Schweissbalken (23) und der wenigstens eine Gegenbalken (39) federnd gelagert sind und im Bereich der Schweissstrecke (H) aneinander anpressbar sind.

14. Einrichtung nach Anspruch 13 oder 14, **dadurch gekennzeichnet, dass** die Schweisstrommel (6) und die Gegentrommel (5) vom gleichen Servomotor oder jeweils von einem eigenen Servomotor und insbesondere von einem hochdynamischen Elektromotor angetrieben sind.

15. Einrichtung nach einem der Ansprüche 12 bis 14, **dadurch gekennzeichnet, dass** der wenigstens eine Schweissbalken (23) und der wenigstens eine Gegenbalken (39) über ein Planetengetriebe (25, 26) so mit der Welle (16) der Schweisstrommel (6) bzw. der Welle (40) der Gegentrommel (5) verbunden sind, dass der wenigstens eine Schweissbalken (23) und der wenigstens eine Gegenbalken (39) ihre Orientierung bezüglich einer vertikalen Ebene im Betrieb beibehalten.

16. Einrichtung nach Anspruch 15, **dadurch gekennzeichnet, dass** mit der Transportvorrichtung (2) nebeneinander zwei Produktströme (A, B) der zu verpackenden Gegenstände (3, 4) transportierbar sind und dass die Schweissvorrichtung (1) für jeden Produktstrom (A, B) wenigstens einen Schweissbalken (23, 23') und einen Gegenbalken (39, 39') aufweist, wobei die Schweissbalken (23, 23') und die Gegenbalken (39, 39') jeweils achsial zueinander versetzt sind.

17. Einrichtung nach einem der Ansprüche 12 bis 16, **dadurch gekennzeichnet, dass** die Schweisstrommel (6) wenigstens zwei oder wenigstens drei Schweissbalken (23) und die Gegentrommel (5) wenigstens zwei oder wenigstens drei Gegenbalken (39) aufweist, wobei die Schweissbalken (23) und die Gegenbalken (39) jeweils im gleichen Abständen zueinander an Haltern (17, 18, 19, 20) gelagert sind.

18. Einrichtung nach einem der Ansprüche 12 bis 17, **dadurch gekennzeichnet, dass** im Bereich der Transportvorrichtung (2) eine Messvorrichtung (33) angeordnet ist, mit welcher die vorlaufenden und/oder nachlaufenden Kanten der Gegenstände (3, 4) detektierbar sind.
